# EUROPEAN PATENT APPLICATION

(11) **EP 2 599 689 A2**
(43) Date of publication of application: **05.06.2013**
(21) Application number: 12191609.2
(22) Date of filing: 07.11.2012
(51) Int. Cl.: B62D 21/15, B62D 25/08

(54) **Motor vehicle front-face module comprising a flexible zone**

(30) Priority: 29.11.2011 US 201113306152
(71) Applicant: Faurecia Bloc Avant, 92000 Nanterre (FR)
(72) Inventor: Graves, Wayne, ROYAL OAK, MI Michigan 48067 (US); Harris, Peter, ROYAL OAK, MI Michigan 48067 (US)
(74) Representative: Blot, Philippe Robert Emile

(57) **Abstract**

This module (1) comprises a stiff supporting structure (2) formed in a single piece and arranged against a lower beam of the motor vehicle chassis, said structure (2) comprising a rear face (4) comprising at least one attachment organ (12) to the chassis of the vehicle, and a front face (6) extending opposite the rear face (4), said rear (4) and front (6) faces being interconnected via at least one intermediate junction (8).

The or each intermediate junction (8) comprises a flexible zone (34), said flexible zone (34) forming a deformable energy absorption zone (34) in case of an impact against the front face (6).

## Description

The present invention relates to a motor vehicle front-face module of the type attached to side struts and cradle extensions of a motor vehicle chassis, said module comprising a stiff supporting structure formed in a single piece and arranged against a lower beam of the motor vehicle chassis, said structure comprising a rear face comprising at least one attachment organ to the chassis of the vehicle, and a front face extending opposite the rear face, said rear and front faces being interconnected via at least one intermediate junction.

The present invention also relates to a motor vehicle comprising a module of this type.

A front-face module of the type described above forms for example a motor vehicle "technical front-face module" and enables various vehicle components to be attached under the hood of the vehicle, such as optics, a group of heating, ventilation and air conditioning (HVAC), engine cooling air management, vehicle drag air management or a hood closing lock and others.

Due to its structure and the materials used to produce it, such a module has the function of providing end customer firm feel and / or high quality characteristics along with absorption of a part of the energy released during an impact against the front of the vehicle and of limiting the intrusion of outside elements in the motor vehicle during this impact.

To this end and in order for the module to have sufficient rigidity to support the elements of the vehicle attached to it, the module is for example molded in a single piece of plastic material, said piece being reinforced with glass fibers or other mineral-filled material for example a material comprising around 70% polypropylene and 30% glass fiber or 60% polypropylene and 40% glass fiber, 90% polypropylene and 10% mineral for a variation in stiffness needs.

However, when the impact occurs between the motor vehicle and a pedestrian, the strength and rigidity of the front-face module often results in injuries to the pedestrian, particularly at his pelvis region. To mitigate this risk, it is proposed to add specific absorption elements in front of the front-face module, said elements being constructed so as to be crushed upon collision with a pedestrian and to protect its legs by limiting the risk of injury. These absorption elements are for example formed by pads made of flexible material, such as foam or other or hollow tubular elements that are able to deform by absorbing energy.

However, such absorption elements are bulky and occupy a large space under the hood as the available volume tends to be reduced. In addition, these elements have to be attached in front of the front-face module, which requires additional fastening means, complicates the assembly of the vehicle and also add considerable weight to it. Furthermore, the absorption elements do not present a sufficient rigidity to provide a "strong" feeling for the user of the vehicle when said user presses on the front face of the vehicle. This lack of rigidity results in the user having the impression of not being sufficiently protected in case of an impact or having a perception of low quality.

One object of the invention is to provide a front-face module which provides the softness required by the legal regulations relating to pedestrian security whilst providing sufficient rigidity, without requiring the adding of specific absorption elements.

The invention therefore relates to a front-face module of the aforementioned type, **characterised in that** the or each intermediate junction comprises a flexible zone, said flexible zone forming a deformable energy absorption zone in case of an impact against the front face.

In accordance with other aspects of the front-face module:
- the or each intermediate junction is arranged to enable a rotation of the front face towards the rear face in case of an impact on the front face ;
- the or each intermediate junction is arranged to enable a rotation of the upper part of the front face towards the rear face in case of an impact on the front face ;
- the rear and front faces are interconnected via at least two intermediate flexible junctions ;
- the two junctions are located at opposite transverse ends of the rear and front faces, each junction being L-shaped and being rounded about a common rotation axis, said axis being defined by the points located at the angles of the L-shaped junctions ;
- the two junctions are located at opposite transverse ends of the rear and front faces, each junction being U-shaped and being rounded about a common rotation axis, said axis being defined by the lowest points of each of the U-shaped junctions;
- the rear and front faces comprise a plurality of ribs which forms cells in said faces ;
- the rear and front faces are equipped with a plurality of fixing means, said means enabling parts of the vehicle to be attached on the rear and front faces ;
- the fixing means comprise means for fixing a bumper beam to the front face;
- the front face comprises upper and lower beams connected to each other at their transverse ends by lateral arms such that the beams and the arms form a structural frame ;
- the lateral arms are arranged to transmit energy between the upper and lower beams in case of an impact on the front face ;
- the front face further comprises one central arm, said central arm being connected at one of its ends to the upper beam and at its other end to the lower beam ;
- the structural frame comprises at least one opening delimited by upper and lower beams and by at least one of the lateral arms ;
- the structural frame comprises an opening delimited by one lateral arm and by the central arm and an other opening delimited by the other lateral arm and the central arm ;
- the stiff supporting structure further comprises an air guide enabling a flow of cooling air inside the structure.

The invention also relates to a motor vehicle comprising a chassis equipped with side struts and cradle extensions, wherein a front-face module as described above is attached to said side struts and to said cradle extensions.

Other features and advantages of the invention will appear upon reading the following description, given by way of example and with reference to the accompanying drawings, in which:
- Fig. 1 is a schematic, perspective view of a motor vehicle front-face module according to a first embodiment of the invention ;
- Fig. 2 is a schematic, perspective view of the front-face module of Fig.1 on which other parts of the vehicle have been attached ;
- Fig. 3 is a schematic side view of the front-face module of Fig. 1 comprising a front face which is able to move between a first position and a second position ;
- Fig. 4 is a schematic, perspective view of a motor vehicle front-face module according to a second embodiment of the invention.

Within this description, the terms "longitudinal", "transverse", "front", "rear", "horizontal" and "vertical" are defined in accordance with the conventional directions of an assembled motor vehicle, i.e. the longitudinal direction corresponds to the length of the vehicle and the transverse direction corresponds to the width of the vehicle.

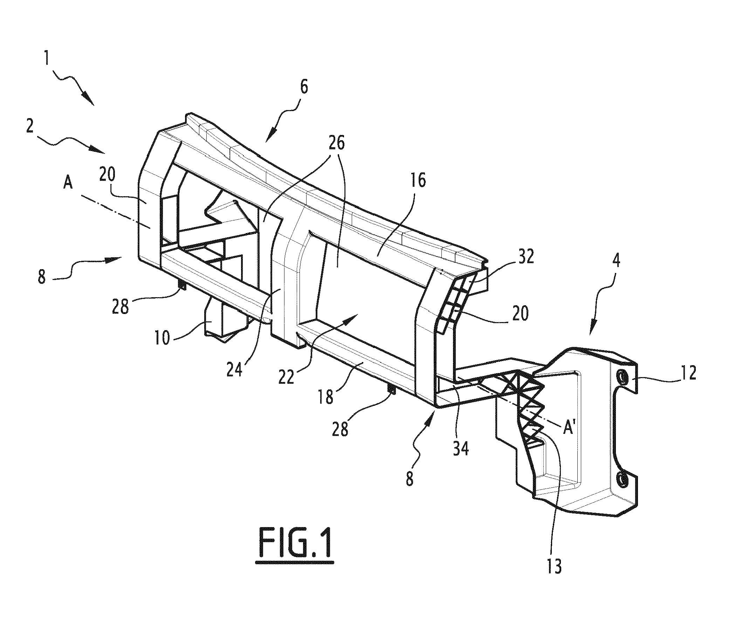

With reference to Fig. 1, a front-face module 1 according to a fist embodiment basically comprising a stiff supporting structure 2 is described. In the embodiment shown, the stiff supporting structure 2 is in the form of a plastics material frame.

Alternatively, the stiff supporting structure 2 is formed by any structure that is able to support a vertical load to oppose firm feel loads necessary to provide the impression of high quality for the end user, whilst supporting the load required during vehicle assembly at fixation points for fascia, optics, grills, attachments for example.

The front-face module 1 is intended to be attached to the motor vehicle chassis (not shown) in a conventional manner such as to the side struts and cradle extensions of the motor vehicle chassis. Such a module extends for example under part or all of the available height under the hood of the motor vehicle. In particular, the front-face module 1 is for example attached next to the upper extensions of the motor vehicle chassis.

The plastics material frame 2 is intended to be arranged against a lower beam of the motor vehicle chassis and contributes to the rigidity of said vehicle chassis. The plastics material frame 2 is formed in a single piece and comprises a rear face 4 and a front face 6 extending opposite the rear face 4. The plastics material frame 2 further comprises two intermediate junctions 8, each junction 8 connecting the rear face 4 to the front face 6 at one transverse end of the rear 4 and front 6 faces. The plastics material frame 2 further comprises means for enabling a flow of cooling air inside the frame.

The rear face 4 comprises two side legs 10 separated from one another in the transverse direction.

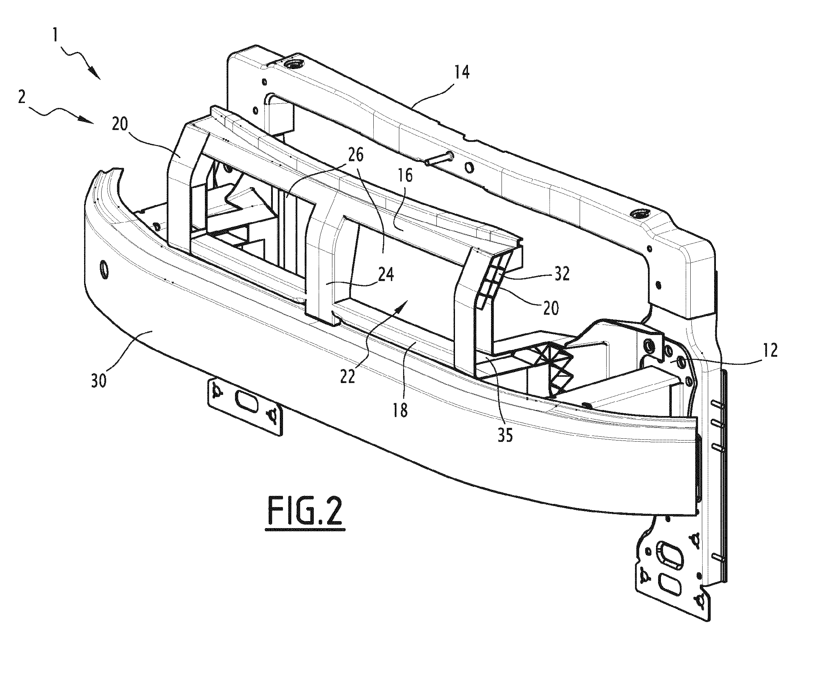

In the embodiment shown, each side leg 10 forms a L-shaped part including one attachment organ 12. As shown in Fig.2, the attachment organ 12 makes it possible to attach the rear face 4 to a frame 14, said frame 14 being fixable to a lower beam of the motor vehicle chassis.

Advantageously, each side leg 10 further comprises a set of ribs 13 arranged so as to form cells in the side legs 10. The ribs 13 enable to strengthen the rear face 4.

Advantageously, the rear face 4 further comprises additional fixing means (not shown) aimed at fixing other parts of the motor vehicle on the rear face 4.

The front face 6 comprises an upper beam 16 and a lower beam 18 separated from one another in height and two lateral arms 20 separated from one another in the transverse direction. The upper beam 16 and the lower beam 18 are connected to each other at their transverse ends by the lateral arms 20 such that the beams 16, 18 and the arms 20 form a structural frame surrounding a central opening 22.

The upper 16 and lower 18 beams are substantially parallel to each other and the lateral arms 20 are substantially parallel to each other so that the central opening 22 has a substantially rectangular shape. The central opening 22 is for example intended to receive part of a group of heating, ventilation and air conditioning and to allow air to pass through the front-face module 1 towards elements located at the rear of said module 1.

According to the embodiment shown in Fig. 1 to 3, the front-face module 1 further comprises a central arm 24, substantially parallel to the lateral arms 20, connecting the upper beam 16 to the lower beam 18. The central arm 24 extends between the lateral arms 20 substantially at the center of the upper 16 and lower 18 beams so that it separates the central opening 22 into two openings 26 having substantially the same dimensions. The central arm 24 strengthens the attachment between the upper 16 and lower 18 beams.

The upper 16 and lower 18 beams and the lateral 20 and central 24 arms are arranged to receive various components of the motor vehicle, as described above. To that end, and as shown in Fig.2, the lower beam 18 includes for example means 28 for fixing a bumper beam 30 to the front face 6.

To increase the strength and / or rigidity and adapt the behavior of the front-face module 1 in case of impact against the vehicle, the arms 20, 24 comprise for example a set of ribs 32, said ribs 32 forming cells in the arms 20, 24.

The lateral arms 20 are arranged to transmit energy between the upper 16 and lower 18 beams in case of an impact on the front face 6.

Advantageously, the front face 6 further comprises additional fixing means (not shown) aimed at fixing other parts of the motor vehicle on the front face 6.

The front-face module 1 described above is adapted to provide the standard functions of a front-face module, but also an appropriate energy absorption in case of "pedestrian impact", that is to say in case of impact between the vehicle and a pedestrian while limiting the risk of injury to the pedestrian.

To that end, each intermediate junction 8 comprises a flexible zone 34, said flexible zone 34 forming a deformable energy absorption zone.

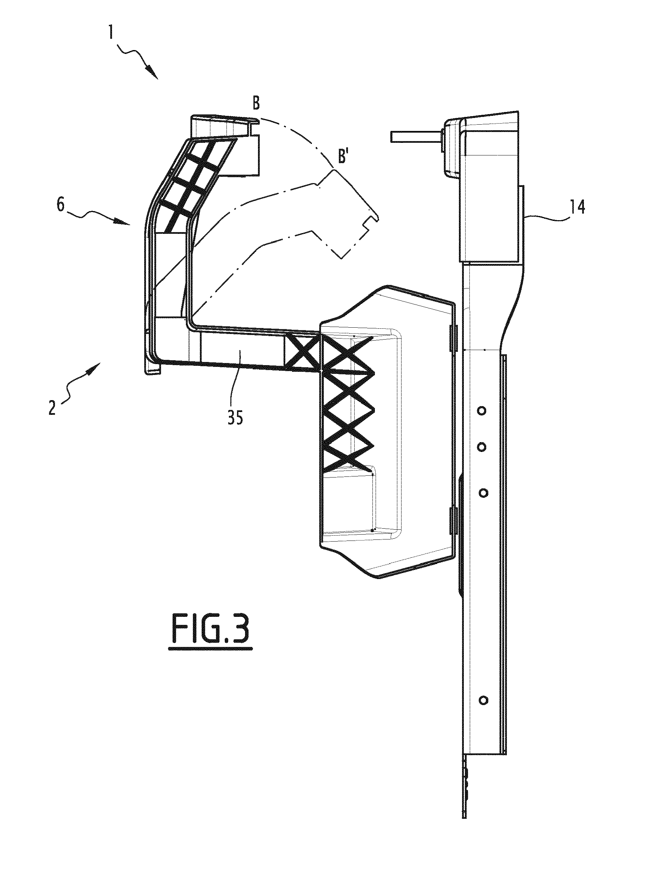

In the embodiment shown, each intermediate junction 8 is arranged to enable a rotation of the front face 6 towards the rear face 4 in case of an impact on the front face 6, as shown in Fig. 3.

Alternatively, each intermediate junction 8 is arranged to enable a rotation only of the upper part of the front face 6 towards the rear face 4 in case of an impact on the front face 6.

In the embodiment shown, each intermediate junction 8 forms a L-shaped part, Each junction 8 comprises at each of its ends two parallel plates surrounding an opening 35, and is filled with material at its angle. The opening 35 improves the flexibility of the intermediate junction 8, which can therefore be deformed in case of an impact.

Each junction 8 is rounded about a rotation axis. The rotation axes of the two intermediate junctions 8 are combined and form a single rotation axis A-A', extending substantially along the lower beam 18 of the front face 6.

The rotation axis A-A' is defined by two points, each point being located at the angle of one of the intermediate junctions 8.

As shown in Fig. 3, thanks to the deformation of the two L-shaped junctions 8, the front face 6 of the front-face module 1 is able to move along the arc B-B' between a first position and a second position. The first position corresponds to the standard position of the front face 6, when at rest, and is shown in solid lines in Fig. 3. The second position corresponds to the maximum position that can be achieved by the front face 6 in case of an impact on it. The second position is shown in dashed lines in Fig. 3.

In case of « pedestrian impact », the front face 6 moves towards the rear face 4, from the first position to a position located on the arc B-B', this movement providing an appropriate energy absorption, thus limiting the risk of injury to the pedestrian.

The front-face module 1 thus makes it possible to provide the softness required by the legal regulations relating to pedestrian security whilst providing sufficient rigidity, without requiring the adding of specific absorption elements. The user therefore has a feeling of being protected when he touches the front of the vehicle.

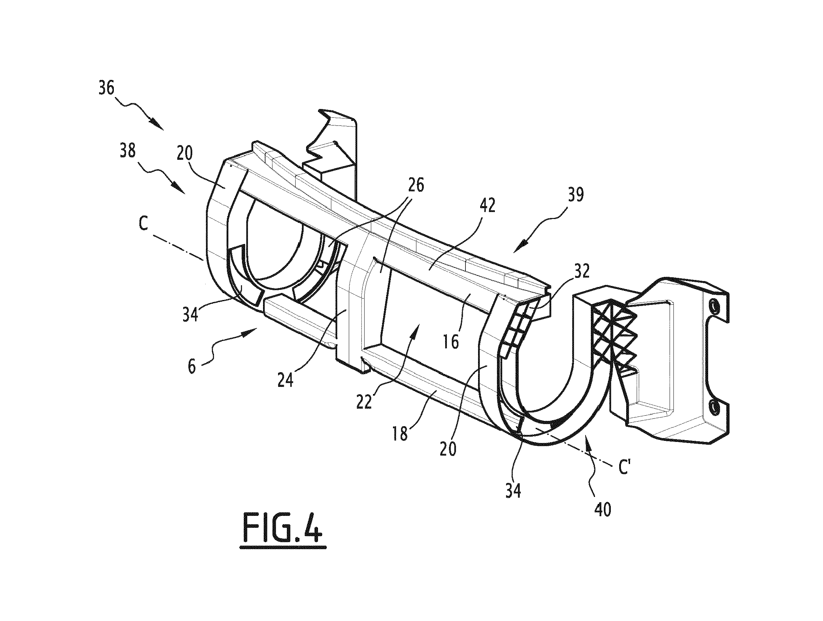

With reference to Fig. 4, a front-face module 36 according to a second embodiment of the invention is described.

The front-face module 36 comprises a stiff supporting structure 38 formed in a single piece, for example in the form of a plastics material frame. The plastics material frame 38 comprises a rear face 39, a front face 6 and two intermediate flexible junctions 40, each junction 40 connecting the rear face 39 to the front face 6 at one transverse end of the rear 39 and front 6 faces.

The rear face 39 comprises two side legs 10 separated from one another in width and an upper beam 42. The two side legs 10 are parallel to each other and are connected to each other at one of theirs ends by the upper beam 42.

Unlike the rear face 4 of the front-face module 1, the rear face 39 extends transversely next to the front face 6, thus forming a frame that can be attached to a lower beam of the motor vehicle chassis.

Unlike the junctions 8 of the front-face module 1, each intermediate junction 40 forms a U-shaped part rounded about a rotation axis.

The common rotation axis C-C' of the two intermediate junctions 40 is defined by two points, each point being the lowest point of one the intermediate junctions 40. The rotation axis C-C' is substantially parallel to the lower beam 18 of the front face 6 and extends between the front face 6 and the rear face 39.

The operation of this second front-face module is similar to the operation of the first front-face module described above, and is therefore not described again

Due to the arrangement of the rear face 39, the second front-face module 36 thus can be directly attached to a lower beam of the motor vehicle chassis, without requiring the use of an additional frame.

The above described front-face modules are able to fold on themselves in case of a shock. Therefore there is no need to provide particular attachment means between the front-face module and the chassis of the vehicle for example arranged to enable the entire module to tilt relative to the chassis in case of an impact. The attachment of the front-face module to the chassis is therefore simplified and can be made stronger.

## Claims

1. Motor vehicle front-face module (1 ; 36) of the type attached to side struts and cradle extensions of a motor vehicle chassis, said module (1 ; 36) comprising a stiff supporting structure (2 ; 38) formed in a single piece and arranged against a lower beam of the motor vehicle chassis, said structure (2 ; 38) comprising a rear face (4 ; 39) comprising at least one attachment organ (12) to the chassis of the vehicle, and a front face (6) extending opposite the rear face (4 ; 39), said rear (4 ; 39) and front (6) faces being interconnected via at least one intermediate junction (8 ; 40), **characterised in that** the or each intermediate junction (8 ; 40) comprises a flexible zone (34), said flexible zone (34) forming a deformable energy absorption zone (34) in case of an impact against the front face (6).

2. Front-face module (1 ; 36) according to claim 1, **characterised in that** the or each intermediate junction (8 ; 40) is arranged to enable a rotation of the front face (6) towards the rear face (4 ; 39) in case of an impact on the front face (6).

3. Front-face module (1 ; 36) according to either claim 1 or claim 2, **characterised in that** the or each intermediate junction (8 ; 40) is arranged to enable a rotation of the upper part of the front face (6) towards the rear face (4 ; 39) in case of an impact on the front face (6).

4. Front-face module (1 ; 36) according to any one of claims 1 to 3, **characterised in that** the rear (4 ; 39) and front (6) faces are interconnected via at least two intermediate flexible junctions (8 ; 40).

5. Front-face module (1) according to claim 4, **characterised in that** the two junctions (8) are located at opposite transverse ends of the rear (4) and front (6) faces, each junction (8) being L-shaped and being rounded about a common rotation axis (A-A'), said axis being defined by the points located at the angles of the L-shaped junctions (8).

6. Front-face module (36) according to claim 4, **characterised in that** the two junctions (40) are located at opposite transverse ends of the rear (39) and front (6) faces, each junction (40) being U-shaped and being rounded about a common rotation axis (C-C'), said axis being defined by the lowest points of each of the U-shaped junctions (40).

7. Front-face module (1 ; 36) according to any one of claims 1 to 6, **characterised in that** the rear (4 ; 39) and front (6) faces comprise a plurality of ribs (13, 32) which forms cells in said faces.

8. Front-face module (1 ; 36) according to any one of claims 1 to 7, **characterised in that** the rear (4 ; 39) and front (6) faces are equipped with a plurality of fixing means, said means enabling parts of the vehicle to be attached on the rear and front faces.

9. Front-face module (1 ; 36) according to claim 8, **characterised in that** the fixing means comprise means (28) for fixing a bumper beam to the front face (6).

10. Front-face module (1 ; 36) according to any one of claims 1 to 9, **characterised in that** the front face (6) comprises upper (16) and lower (18) beams connected to each other at their transverse ends by lateral arms (20) such that the beams (16, 18) and the arms (20) form a structural frame.

11. Front-face module (1 ; 36) according to claim 10, **characterised in that** the lateral arms (20) are arranged to transmit energy between the upper (16) and lower (18) beams in case of an impact on the front face (6).

12. Front-face module (1 ; 36) according to either claim 10 or claim 11, **characterised in that** the front face (6) further comprises one central arm (24), said central arm (24) being connected at one of its ends to the upper beam (16) and at its other end to the lower beam (18).

13. Front-face module (1 ; 36) according to any one of claims 10 to 12, **characterised in that** the structural frame comprises at least one opening (22) delimited by upper (16) and lower (18) beams and by at least one of the lateral arms (20).

14. Front-face module (1 ; 36) according to claim 12, **characterised in that** the structural frame comprises an opening (26) delimited by one lateral arm (20) and by the central arm (24) and an other opening (26) delimited by the other lateral arm (20) and the central arm (24).

15. Front-face module (1 ; 36) according to any one of claims 1 to 14, **characterised in that** the stiff supporting structure (2 ; 38) further comprises an air guide enabling a flow of cooling air inside the structure (2 ; 38).

16. Motor vehicle comprising a chassis equipped with side struts and cradle extensions, **characterised in that** a front-face module according to any one of claims 1 to 15 is attached to said side struts and to said cradle extensions.
